# EUROPEAN PATENT APPLICATION

(11) **EP 3 059 452 A1**
(43) Date of publication of application: **24.08.2016**
(21) Application number: 16155122.1
(22) Date of filing: 10.02.2016
(51) Int. Cl.: F04D 27/02, F01D 17/14, F02C 7/042, F04D 29/42, F04D 29/46

(54) **ADJUSTABLE-INLET RADIAL-RADIAL COMPRESSOR**

(30) Priority: 18.02.2015 US 201514624618
(71) Applicant: Honeywell International Inc., Morris Plains, NJ 07950 (US)
(72) Inventor: NEJEDLY, Milan, Morris Plains, NJ New Jersey 07950 (US); HOUST, Vit, Morris Plains, NJ New Jersey 07950 (US); TURECEK, Daniel, Morris Plains, NJ New Jersey 07950 (US)
(74) Representative: Houghton, Mark Phillip

(57) **Abstract**

A radial-radial compressor includes an inlet-adjustment mechanism in an air inlet for the compressor, operable to move between an open position and a closed position in the air inlet. The inlet-adjustment mechanism includes a tubular sleeve that is movable in the air inlet with an axial component of movement for adjusting a spacing distance of a trailing edge of the sleeve from an inducer portion of the wheel. In an "on" position the spacing distance is relatively greater, while in the "off" position the spacing distance is relatively smaller and the sleeve therefore reduces an effective inlet area into the inducer portion of the wheel, relative to the effective inlet area in the "on" position.

## Description

### BACKGROUND OF THE INVENTION

The present disclosure relates to radial-radial compressors, such as used in turbochargers, and more particularly relates to radial-radial compressors in which the effective inlet area can be adjusted for different operating conditions.

An exhaust gas-driven turbocharger is a device used in conjunction with an internal combustion engine for increasing the power output of the engine by compressing the air that is delivered to the air intake of the engine to be mixed with fuel and burned in the engine. A turbocharger comprises a compressor wheel mounted on one end of a shaft in a compressor housing and a turbine wheel mounted on the other end of the shaft in a turbine housing. Typically the turbine housing is formed separately from the compressor housing, and there is yet another center housing connected between the turbine and compressor housings for containing bearings for the shaft. The turbine housing defines a generally annular chamber that surrounds the turbine wheel and that receives exhaust gas from an engine. The turbine assembly includes a nozzle that leads from the chamber into the turbine wheel. The exhaust gas flows from the chamber through the nozzle to the turbine wheel and the turbine wheel is driven by the exhaust gas. The turbine thus extracts power from the exhaust gas and drives the compressor. The compressor receives ambient air through an inlet of the compressor housing and the air is compressed by the compressor wheel and is then discharged from the housing to the engine air intake.

Turbochargers can employ a compressor wheel of the radial-radial type because radial-radial compressors can achieve relatively high pressure ratios in a compact arrangement. Intake air for a radial-radial compressor is received in a generally axial direction approaching the wheel but before the air reaches the inducer portion of the wheel the air is turned substantially 90 degrees to proceed generally radially outwardly into the inducer portion. The air passes through the blades of the compressor and is compressed, and is then discharged in a generally radial direction from an exducer portion of the wheel. The compressed air from the wheel is delivered to a volute, and from the volute the air is supplied to the intake of an internal combustion engine.

The operating range of the compressor is an important aspect of the overall performance of the turbocharger. The operating range is generally delimited by a surge line and a choke line on an operating map for the compressor. The compressor map is typically presented as pressure ratio (discharge pressure *Pₒᵤₜ* divided by inlet pressure *Pᵢₙ*) on the vertical axis, versus corrected mass flow rate on the horizontal axis. The choke line on the compressor map is located at high flow rates and represents the locus of maximum mass-flow-rate points over a range of pressure ratios; that is, for a given point on the choke line, it is not possible to increase the flow rate while maintaining the same pressure ratio because a choked-flow condition occurs in the compressor.

The surge line is located at low flow rates and represents the locus of minimum mass-flow-rate points without surge, over a range of pressure ratios; that is, for a given point on the surge line, reducing the flow rate without changing the pressure ratio, or increasing the pressure ratio without changing the flow rate, would lead to surge occurring. Surge is a flow instability that typically occurs when the compressor blade incidence angles become so large that substantial flow separation arises on the compressor blades. Pressure fluctuation and flow reversal can happen during surge.

In a turbocharger for an internal combustion engine, compressor surge may occur when the engine is operating at high load or torque and low engine speed, or when the engine is operating at a low speed and there is a high level of exhaust gas recirculation (EGR). Surge can also arise when an engine is suddenly decelerated from a high-speed condition. Expanding the surge-free operation range of a compressor to lower flow rates is a goal often sought in compressor design.

### BRIEF SUMMARY OF THE DISCLOSURE

The present disclosure describes mechanisms and methods for a radial-radial compressor that can enable the surge line for the compressor to selectively be shifted to the left (i.e., surge is delayed to a lower flow rate at a given pressure ratio), by adjusting the effective area at the inducer portion of the wheel. One embodiment described herein comprises a radial-radial compressor having the following features:
a compressor housing and a radial-radial compressor wheel mounted in the compressor housing and connected to a rotatable shaft for rotation therewith, the radial-radial compressor wheel having a hub and having blades joined to the hub and extending therefrom and terminating at outer tips of the blades, the compressor housing defining an air inlet for leading air in a generally axial direction toward the radial-radial compressor wheel and defining a shroud surface that is adjacent to the outer tips of the blades, the hub of the radial-radial compressor wheel being configured to cooperate with the shroud surface to cause air proceeding through the air inlet to be turned substantially 90 degrees toward a generally radially outward direction relative to a rotational axis of the radial-radial compressor wheel, the blades defining an inducer portion arranged to receive air proceeding in the generally radially outward direction, the compressor housing further defining a volute for receiving compressed air discharged generally radially outwardly from the radial-radial compressor wheel; and
an inlet-adjustment mechanism disposed in the air inlet upstream of the radial-radial compressor wheel and movable between an open or "on" position and a closed or "off" position for adjusting an effective area at the inducer portion of the radial-radial compressor wheel.

The inlet-adjustment mechanism comprises a tubular sleeve that is movable within the air inlet with an axial component of movement. The tubular sleeve has a trailing edge spaced by a spacing distance upstream from the compressor wheel. The axial movement of the tubular sleeve adjusts the spacing distance of the trailing edge from the compressor wheel. In the closed or "off" position of the inlet-adjustment mechanism, the spacing distance is relatively smaller; in the open or "on" position, the spacing distance is relatively greater. The spacing distance in the "on" position is such that an effective inlet area into the inducer portion of the compressor wheel is defined by the hub of the compressor wheel and the shroud surface of the compressor housing-i.e., the tubular sleeve does not prevent the air from following the shroud surface and thus does not have an effect on the effective inlet area, or has a relatively minor effect. The spacing distance in the "off" position is such that the effective inlet area into the inducer portion of the compressor wheel is reduced relative to that in the "on" position-i.e., the tubular sleeve extends into the flow path at the point where the air turns to proceed generally radially outwardly, so as to prevent the air from following the shroud surface of the compressor housing, and hence the effective inlet area is defined between the hub and the trailing edge of the tubular sleeve.

The tubular sleeve of the inlet-adjustment mechanism can be actuated in any of various ways, and the present invention is not limited to any particular actuation system. In one embodiment described herein, the tubular sleeve defines an external helical first thread. The actuation system includes a drive cog having a helical drive thread that is meshed with the first thread of the sleeve. The drive cog is rotatable about its axis but is constrained against axial movement, such that rotation of the drive cog imparts a screw motion (i.e., combined rotational and axial motion) to the tubular sleeve. Thus, rotation of the drive cog in one direction moves the tubular sleeve toward the "off" position and rotation in the opposite direction moves the tubular sleeve toward the "on" position. Preferably but not essentially, the tubular sleeve also defines an external helical second thread axially spaced from the first thread, and the sleeve is threaded into a nut having a corresponding internal thread that is meshed with the second thread of the sleeve. The internal thread of the nut is substantially coaxial with the compressor wheel. The nut helps to guide the motion of the sleeve and keep the sleeve substantially coaxial with the compressor wheel.

In another embodiment described herein, a linear axially extending rack is defined by or secured on the tubular sleeve, the rack defining axially spaced teeth. The actuation system includes a drive pinion whose rotational axis extends perpendicular to the axial direction, the drive pinion having teeth meshed with the teeth of the rack. Rotation of the drive pinion imparts a purely axial motion to the tubular sleeve. Thus, rotation of the drive pinion in one direction moves the tubular sleeve toward the "off" position and rotation in the opposite direction moves the tubular sleeve toward the "on" position.

Other actuation systems that work on different principles can also be used. For instance, a pneumatic or hydraulic actuation system can be used.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a perspective view of a radial-radial compressor in accordance with a first embodiment of the invention, with a portion of the compressor housing cut away to show internal details, wherein the inlet-adjustment mechanism is in the "off" position;
FIG. 2 is an axial cross-sectional view of the radial-radial compressor of FIG. 1, with the inlet-adjustment mechanism in the "off" position;
FIG. 3 is a view similar to FIG. 1, but with the inlet-adjustment mechanism in the "on" position;
FIG. 4 is a perspective view of a radial-radial compressor in accordance with a second embodiment of the invention;
FIG. 5 is an axial cross-sectional view of the compressor of FIG. 4, with the inlet-adjustment mechanism in the "off" position; and
FIG. 6 is a view similar to FIG. 5, but with the inlet-adjustment mechanism in the "on" position.

### DETAILED DESCRIPTION OF THE DRAWINGS

The present inventions now will be described more fully hereinafter with reference to the accompanying drawings, in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

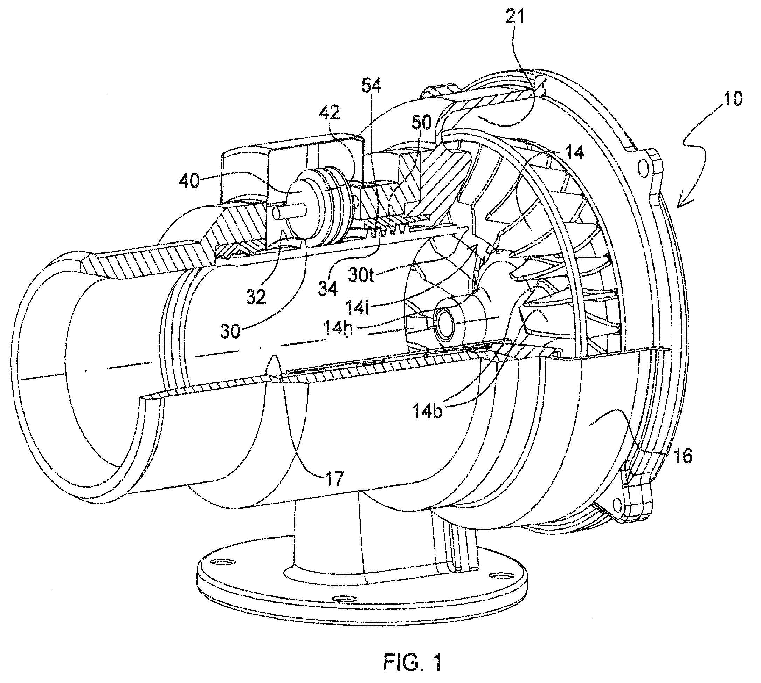

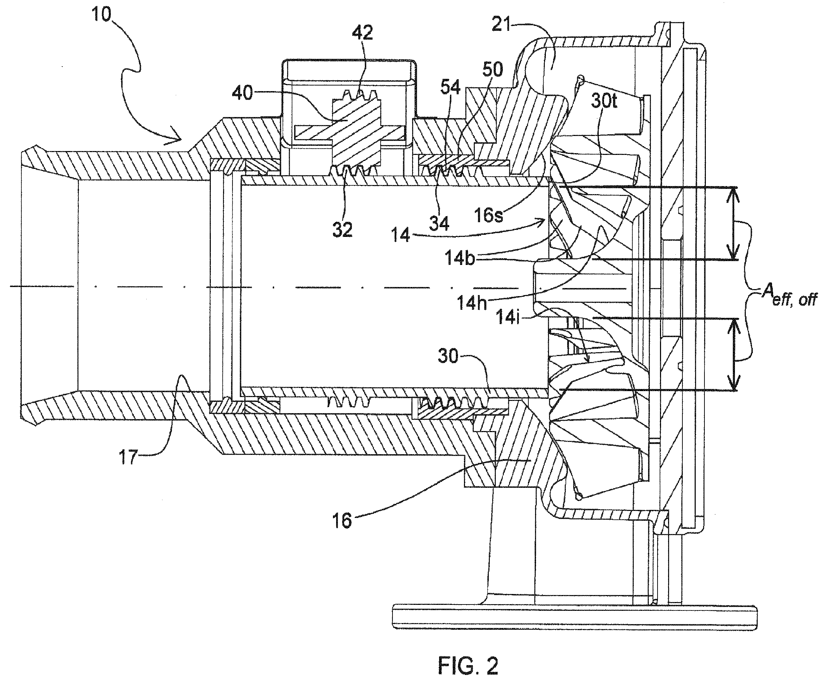

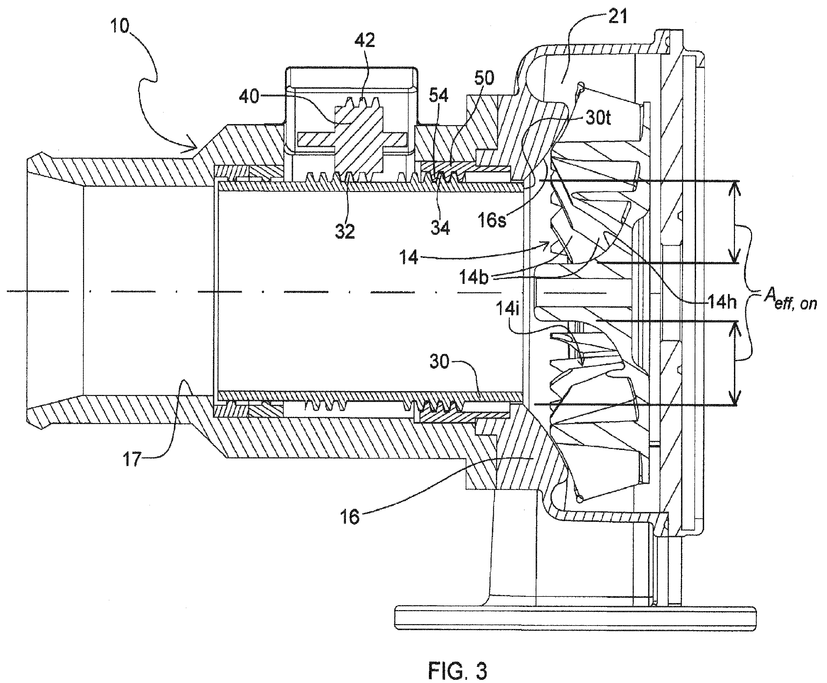

A radial-radial compressor **10** in accordance with one embodiment of the invention is illustrated in perspective view in FIG. 1, and in cross-sectional view in FIGS. 2 and 3. The turbocharger comprises a radial-radial compressor wheel **14** mounted in a compressor housing **16** on one end of a rotatable shaft (not shown). The compressor housing defines an air inlet **17** for leading air generally axially toward the compressor wheel **14.** The shaft of the compressor wheel is supported in bearings (not shown) and the shaft is rotated by a turbine wheel or an electric motor or other means (not shown) coupled to the shaft, thereby rotatably driving the compressor wheel, which compresses air drawn in through the compressor inlet and discharges the compressed air generally radially outwardly from the compressor wheel into a volute **21** for receiving the compressed air. From the volute **21**, the air can be used for any of various purposes, such as being supplied to the intake of an internal combustion engine (not shown) for boosting the performance of the engine.

The compressor wheel **14** includes a hub **14h** and a plurality of blades **14b** joined to the hub and extending therefrom and terminating at outer tips of the blades.

The compressor housing **16** defines a shroud surface **16s** that is closely adjacent to the outer tips of the compressor blades. The shroud surface **16s** defines a curved contour that is generally parallel to the curved contour of the compressor wheel. The wheel hub **14h** and the shroud surface **16s** cooperate to define a flow path between them, which flow path is configured so as to lead air in a generally radially outward direction as the air encounters the inducer portion **14i** of the compressor wheel. The air proceeds radially outwardly and is compressed as it progresses through the passages defined between the blades **14b,** the air then being discharged outwardly into the volute **21.**

In accordance with the invention, the compressor of the turbocharger includes an inlet-adjustment mechanism disposed in the air inlet **17** of the compressor housing just upstream of the shroud surface **16s** and inducer portion **14i.** The inlet-adjustment mechanism comprises a tubular sleeve **30** having an inside diameter selected with reference to the inducer portion **14i** of the compressor wheel **14.** The mechanism **30** is movable, with an axial component of movement, between a closed or "off" position (FIGS. 1 and 2) and an open or "on" position (FIG. 3) for adjusting the effective inlet area at the inducer portion of the radial-radial compressor. The sleeve **30** can move purely axially (i.e., with no rotational component of movement) or can move both axially and rotationally (i.e., like a screw). In the particular embodiment of FIGS. 1-3, the motion of the sleeve is a screw motion, but a second embodiment is described below that undergoes purely axial motion. The sleeve **30** has a trailing edge **30t** spaced by a spacing distance upstream from the compressor wheel **14.** The axial movement of the sleeve is effective to adjust the spacing distance of the trailing edge **30t** from the compressor wheel.

Thus, in the closed or "off" position of the inlet-adjustment mechanism the spacing distance **30t** is relatively smaller as shown in FIG. 2. The spacing distance in the "off" position is such that an effective inlet area ***A***_{*eff*, *off*} into the inducer portion **14i** of the compressor wheel is reduced relative to that in the "on" position by virtue of the sleeve **30** extending into the flow path at a point where the air in the "on" position would turn to proceed generally radially outwardly, so as to prevent the air from following the shroud surface **16s** of the compressor housing, such that the effective inlet area ***A***_{*eff*, *off*} is defined between the hub **14h** and the trailing edge **30t** of the sleeve **30.**

In the open or "on" position of FIG. 3, the spacing distance between the wheel **14** and the sleeve trailing edge **30t** is relatively greater. The spacing distance in the "on" position is such that the air is generally able to turn toward the radially outward direction and follow the shroud surface **16s.** Accordingly, in the "on" position of the sleeve **30** an effective inlet area ***A***_{*eff*, *on*} into the inducer portion **14i** of the compressor wheel is defined by the hub **14h** of the compressor wheel and the shroud surface **16s** of the compressor housing.

At low flow rates, the inlet-adjustment sleeve **30** can be positioned in the "off" position for setting the effective inlet area into the compressor wheel at a minimum value. At high flow rates, the sleeve **30** can be positioned in the "on" position for increasing the effective inlet area. The sleeve **30** can also be positioned at any of various intermediate positions between the "off" and "on" positions, if so desired (e.g., for intermediate flow rates), in order to permit a range of inlet area adjustments for the radial-radial compressor.

In the embodiment of FIG. 1-3, the tubular sleeve **30** is actuated by a lead-screw type actuation system. The tubular sleeve **30** defines an external helical first thread **32.** The actuation system includes a drive cog **40** having a helical drive thread **42** that is meshed with the first thread **32** of the sleeve. The drive cog **40** is rotatable about its axis but is constrained against axial movement, such that rotation of the drive cog imparts a screw motion (i.e., combined rotational and axial motion) to the tubular sleeve **30.** Thus, rotation of the drive cog **40** in one direction moves the tubular sleeve **30** toward the "off" position (FIGS. 1 and 2) and rotation in the opposite direction moves the tubular sleeve toward the "on" position (FIG. 3).

Preferably but not essentially, the tubular sleeve **30** also defines an external helical second thread **34** axially spaced from the first thread **32,** and the sleeve is threaded into a nut **50** having a corresponding internal thread **54** that is meshed with the second thread **34** of the sleeve. The internal thread **54** of the nut is substantially coaxial with the compressor wheel **14.** The nut **50** helps to guide the motion of the sleeve and keep the sleeve substantially coaxial with the compressor wheel.

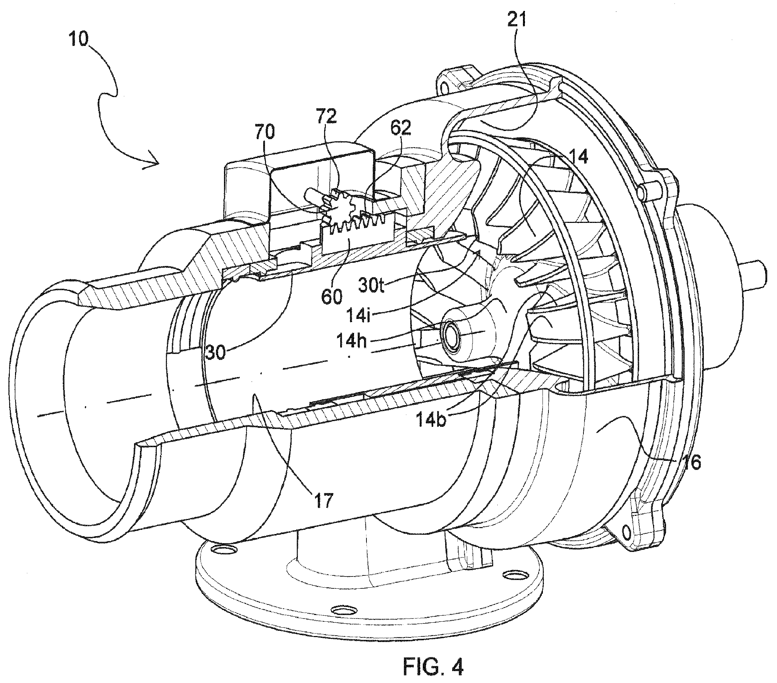

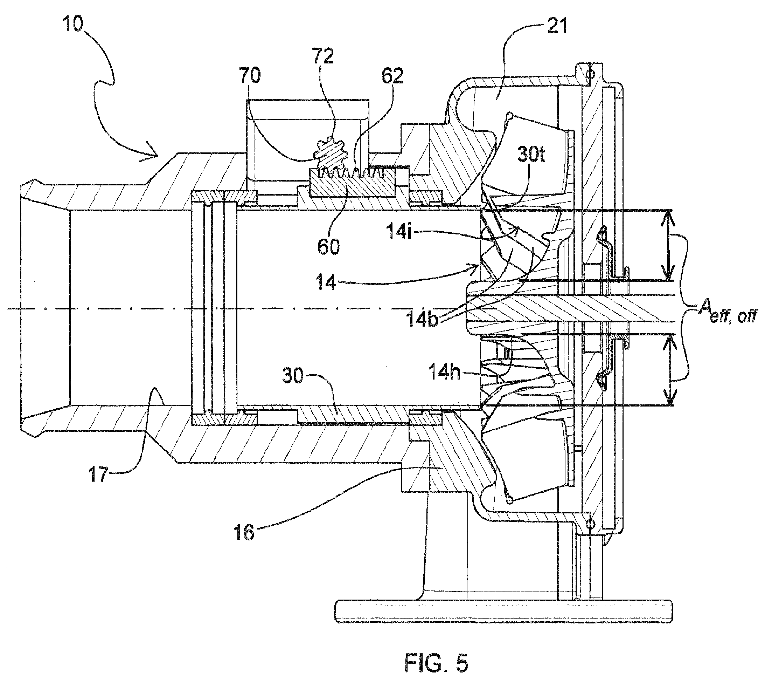

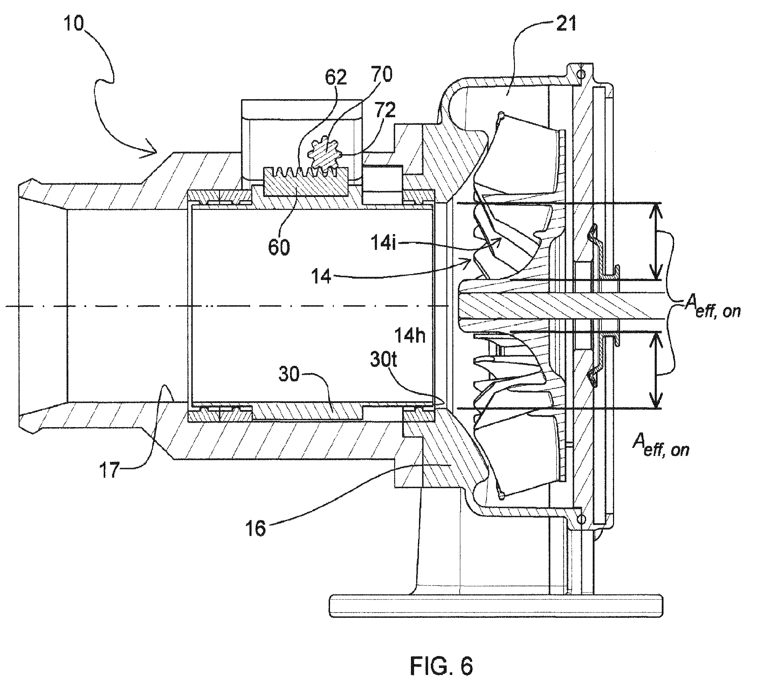

A second embodiment of the invention is illustrated in FIGS. 4-6, and is substantially similar to the first embodiment except as regards the actuation system for the tubular sleeve **30.** Accordingly, the aspects of the second embodiment that are substantially like those of the first embodiment are not described again here. In accordance with the second embodiment, the actuation system comprises a rack-and-pinion system. Thus, a linear rack **60** is provided or defined on the tubular sleeve **30,** extending axially along the sleeve. The rack defines axially spaced teeth **62.** The actuation system includes a drive pinion **70** whose rotational axis extends perpendicular to the axial direction, the drive pinion having teeth **72** meshed with the teeth **62** of the rack. Rotation of the drive pinion **70** imparts a purely axial motion to the tubular sleeve **30.** Thus, rotation of the drive pinion in one direction moves the tubular sleeve toward the "off" position (FIGS. 4 and 5) and rotation in the opposite direction moves the tubular sleeve toward the "on" position (FIG. 6).

As in the first embodiment, the effective inlet area ***A**_{eff}* into the inducer portion **14i** of the compressor wheel is variable by positioning the tubular sleeve **30** in various axial positions having different spacing distances between the sleeve's trailing edge **30t** and the compressor wheel **14.** In this manner, the effective inlet area of the compressor can be adjusted depending on operating conditions substantially as in the first embodiment.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A radial-radial compressor comprising:
a compressor housing and a radial-radial compressor wheel mounted in the compressor housing and connected to a rotatable shaft for rotation therewith, the radial-radial compressor wheel having a hub and having blades joined to the hub and extending therefrom and terminating at outer tips of the blades, the compressor housing defining an air inlet for leading air in a generally axial direction toward the radial-radial compressor wheel and defining a shroud surface that is adjacent to the outer tips of the blades, the hub of the radial-radial compressor wheel being configured to cooperate with the shroud surface to cause air proceeding through the air inlet to be turned substantially 90 degrees toward a generally radially outward direction relative to a rotational axis of the radial-radial compressor wheel, the blades defining an inducer portion arranged to receive air proceeding in the generally radially outward direction, the compressor housing further defining a volute for receiving compressed air discharged generally radially outwardly from the radial-radial compressor wheel; and
an inlet-adjustment mechanism disposed in the air inlet upstream of the radial-radial compressor wheel and movable between an open or "on" position and a closed or "off" position for adjusting an effective inlet area at the inducer portion of the radial-radial compressor wheel, the inlet-adjustment mechanism comprising a tubular sleeve that is movable within the air inlet with an axial component of movement, the tubular sleeve having a trailing edge spaced by a spacing distance upstream from the compressor wheel, the axial movement of the tubular sleeve being effective to adjust the spacing distance of the trailing edge from the compressor wheel, wherein in the closed or "off" position of the inlet-adjustment mechanism the spacing distance is relatively smaller, and in the open or "on" position the spacing distance is relatively greater, the spacing distance in the "on" position being such that the effective inlet area into the inducer portion of the compressor wheel is defined by the hub of the compressor wheel and the shroud surface of the compressor housing, the spacing distance in the "off" position being such that the effective inlet area into the inducer portion of the compressor wheel is defined between the hub and the trailing edge of the tubular sleeve.

2. The radial-radial compressor of claim 1, further comprising an actuation system for causing movement of the tubular sleeve between the "off" and "on" positions.

3. The radial-radial compressor of claim 2, wherein the actuation system comprises a lead-screw arrangement.

4. The radial-radial compressor of claim 3, wherein the lead-screw arrangement includes an external helical first thread on the tubular sleeve, and a drive cog having a helical thread meshed with the first thread on the tubular sleeve, rotation of the drive cog about an axis thereof imparting a screw motion to the tubular sleeve so as to adjust said spacing distance.

5. The radial-radial compressor of claim 4, wherein the lead-screw arrangement further comprises a nut having an internal helical thread, and the tubular sleeve includes an external helical second thread axially spaced from the first thread, the thread of the nut meshing with the second thread of the tubular sleeve, the nut guiding the screw motion of the tubular sleeve and keeping the tubular sleeve substantially coaxial with the compressor wheel.

6. The radial-radial compressor of claim 2, wherein the actuation system comprises a rack-and-pinion arrangement.

7. The radial-radial compressor of claim 6, wherein the rack-and-pinion arrangement includes an axially extending rack on the tubular sleeve, the rack having axially spaced teeth, and a drive pinion having a rotation axis extending perpendicular to the axial direction, the drive pinion having teeth meshed with the teeth of the rack, rotation of the drive pinion imparting axial motion to the tubular sleeve.
